# FASCICULE DE BREVET EUROPEEN

(11) **EP 3 850 823 B1**
(45) Date de publication et mention de la délivrance du brevet: **29.01.2025**
(21) Numéro de dépôt: 19765258.9
(22) Date de dépôt: 10.09.2019
(51) Int. Cl.: H04N 13/243, H04N 23/51, H04N 23/698, H04N 23/90, B64D 43/00, B64D 47/08

(54) **EQUIPEMENT OPTRONIQUE D'AIDE AU PILOTAGE D'UN AERONEF**
OPTRONISCHE AUSRÜSTUNG ZUR UNTERSTÜTZUNG BEI DER PILOTIERUNG EINES FLUGZEUGS
OPTRONIC EQUIPMENT FOR ASSISTANCE IN PILOTING AN AIRCRAFT

(30) Priorité: 10.09.2018 FR 1800948
(43) Date de publication de la demande: 21.07.2021
(73) Titulaire: Safran Electronics & Defense, 75015 Paris (FR)
(72) Inventeur: MASSIE, Louis, 92100 Boulogne-Billancourt (FR); KLING, Emmanuel, 92100 Boulogne-Billancourt (FR); VAISSIERE, Michel, 92100 Boulogne-Billancourt (FR); DEVICHI, Thomas, 92100 Boulogne-Billancourt (FR)
(74) Mandataire: Cabinet Boettcher
(86) Numéro de dépôt international: PCT/EP2019/074137
(87) Numéro de publication internationale: WO 2020/053227

(56) Documents cités:
- JP-A- 2013 187 782
- US-A1- 2008 143 842
- US-A1- 2011 234 640
- US-A1- 2011 310 225
- US-A1- 2014 132 804
- US-A1- 2014 327 733
- US-A1- 2016 005 319
- US-A1- 2016 088 280
- US-A1- 2018 020 204

## Description

L'invention concerne un équipement optronique d'aide au pilotage d'un aéronef.

### ARRIERE PLAN TECHNOLOGIQUE DE L'INVENTION

Dans le domaine militaire, il est connu des systèmes d'aide au pilotage d'aéronef appelé « FLIR » (pour Forward Looking InfraRed). Ces systèmes comportent usuellement une caméra infrarouge en bande thermique longue (plus connue sous l'acronyme anglais LWIR) raccordée au casque du pilote de manière à ce qu'un flux vidéo soit projeté sur sa visière à partir des données fournies par la caméra lui permettant ainsi de pouvoir se guider de nuit ou dans des conditions d'environnement difficiles.

On connait notamment des systèmes dans lesquels la caméra est orientable en site et en gisement, l'orientation de la caméra étant asservie sur l'orientation du casque du pilote afin que le flux vidéo projeté sur la visière du casque soit lié à l'orientation du casque.

Un tel système impose toutefois la mise en place d'un asservissement sophistiqué entre le casque et la caméra.

Depuis une dizaine d'années, un autre type d'architecture dit « à architecture répartie » ou bien encore « à architecture à pupilles distribuées » (plus connue sous son terme anglais Distributed Aperture System) a ainsi vu le jour : le système d'aide au pilotage comporte plusieurs caméras infrarouge réparties sur l'avant de l'aéronef dont les différents champs de visée s'interfèrent de manière qu'un bandeau panoramique puisse être généré à partir des données fournies par les différentes caméras.

On extrait ensuite de ce bandeau une vue correspondante à l'orientation du casque du pilote pour projeter sur la visière du casque la vue correspondante, recréant ainsi artificiellement une caméra orientable et asservie sur l'orientation du casque.

Un tel système permet donc de s'affranchir d'un asservissement caméra/casque complexe mais est également multi-utilisateurs. En effet, il est possible d'extraire du bandeau panoramique autant de vues indépendantes qu'il y a d'utilisateurs.

La difficulté de ce système réside dans la création d'un bandeau panoramique de grandes dimensions sans défaut notable. Actuellement un nombre important de caméras et/ou des caméras lourdes et coûteuses sont ainsi utilisés.

Les documents US2014/0327733 A1 et US 2016/0088280 A1 décrivent des documents de l'art antérieur.

### OBJET DE L'INVENTION

Un but de l'invention est de proposer un équipement optronique d'aide au pilotage d'un aéronef à architecture simplifiée à pupilles distribuées.

### BREVE DESCRIPTION DE L'INVENTION

En vue de la réalisation de ce but on propose un équipement optronique d'aide au pilotage d'un aéronef comportant un premier ensemble de trois caméras, appelées première caméra, deuxième caméra et troisième caméra, agencées sur l'aéronef pour générer un bandeau panoramique à partir des données transmises par les trois caméras du premier ensemble et un deuxième ensemble de trois caméras, appelées quatrième caméra, cinquième caméra et sixième caméra, agencées sur l'aéronef pour générer un bandeau panoramique à partir des données transmises par les trois caméras du deuxième ensemble,
les caméras étant montées à l'avant de l'aéronef au niveau de son nez, trois caméras étant situées à droite du nez de l'aéronef et trois caméras étant situées à gauche de son nez,
la troisième caméra et la quatrième caméra occupant une position d'extrémité sur l'aéronef, vis-à-vis des quatre autres caméras du premier ensemble et du deuxième ensemble,
la troisième caméra et la quatrième caméra étant agencées de sorte à avoir un champ de visée plus important en horizontal qu'en vertical,
seules la troisième caméra et la quatrième caméra sur les six caméras des deux ensembles étant agencées de sorte à avoir un champ de visée plus important en horizontal qu'en vertical, la troisième caméra et la quatrième caméra encadrant les quatre autres caméras,
les deux ensembles étant agencés de manière que les deux bandeaux se recouvrent au moins en partie de sorte à fournir une vision stéréoscopique au pilote.

De la sorte, en tournant astucieusement au moins l'une des caméras externes vis-à-vis des autres caméras, il est possible d'augmenter le champ de visée en gisement du bandeau panoramique sans augmenter le nombre de caméras pour autant et ce tout en conservant un champ de visée vertical important au centre du bandeau.

Ceci permet de limiter la masse et l'encombrement de l'équipement optronique.

Optionnellement, au moins deux caméras contiguës sont agencées avec une disposition concave.

Optionnellement, les deux caméras agencées au centre des six caméras sont croisées de manière qu'une première caméra du premier ensemble et une première caméra du deuxième ensemble soient agencées avec une disposition concave et qu'une deuxième caméra du premier ensemble et une deuxième caméra du deuxième ensemble soient agencées avec une disposition concave également.

Optionnellement, deux caméras appartenant respectivement à un ensemble différent sont décalées en site l'une par rapport à l'autre.

Avantageusement alors, l'équipement comprend une unité électronique de traitement reliée aux caméras et agencée pour afficher les deux bandeaux d'images de manière stéréoscopique et/ou pour former au moins une image à large champ à partir des deux bandeaux d'images.

Optionnellement, les caméras du premier ensemble sont alimentées par une première source d'alimentation et les caméras du deuxième ensemble sont alimentées par une deuxième source d'alimentation qui est indépendante de la première source d'alimentation.

Optionnellement, l'équipement comporte au moins un bloc dans lequel sont agencées les caméras.

Optionnellement, les caméras travaillent dans le domaine de l'infra-rouge.

Optionnellement, les caméras sont de type LWIR.

Optionnellement, les caméras sont non refroidies.

De préférence, l'équipement comprend une unité de traitement reliée aux caméras et à un casque équipé d'un dispositif d'affichage d'image visible par les yeux du pilote portant le casque.

### BREVE DESCRIPTION DES DESSINS

L'invention sera mieux comprise à la lumière de la description qui suit d'un mode de réalisation particulier non limitatif de l'invention en référence aux figures ci-jointes, parmi lesquelles :
- la figure 1 est un schéma d'un équipement optronique selon un mode de réalisation particulier de l'invention,
- la figure 2 illustre schématiquement le bandeau panoramique créé à l'aide de l'équipement illustré à la figure 1,
- la figure 3 est une vue similaire à celle de la figure 2 prenant en compte les phénomènes de distorsions et de géométrie sphérique des champs de visée des caméras de l'équipement,
- la figure 4 est une vue schématique d'une partie de l'équipement illustré à la figure 1.

### DESCRIPTION DETAILLEE DE L'INVENTION

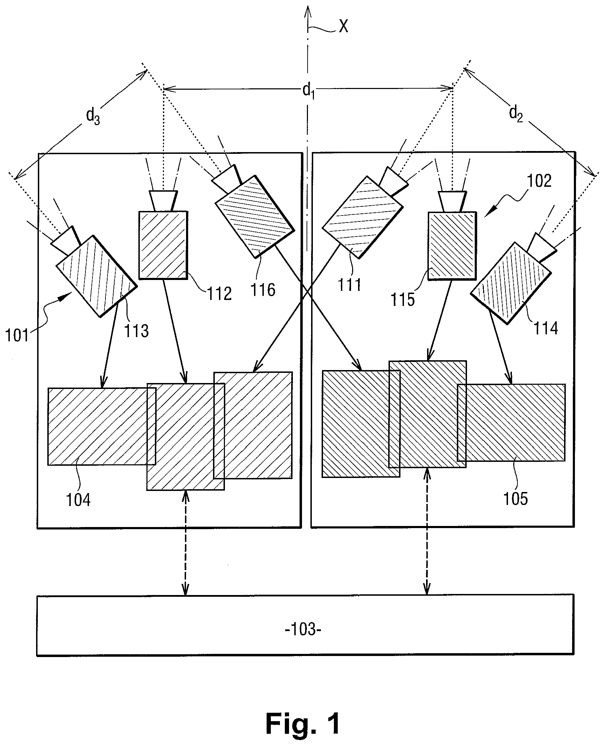

En référence à la figure 1, l'équipement optronique d'aide au pilotage d'un aéronef selon un premier mode de réalisation de l'invention comporte un premier ensemble 101 de trois caméras 111, 112, 113 agencées sur l'aéronef et un deuxième ensemble 102 de trois caméras 114, 115, 116 agencées sur l'aéronef. Chaque ensemble comporte strictement trois caméras de sorte que l'équipement comporte strictement six caméras.

On note que les caméras sont montées sur l'aéronef sans avoir recours à une tourelle.

Les caméras sont par exemple montées de manière indépendante sur l'aéronef ou au contraire l'équipement comporte un premier bloc dans lequel sont agencées trois des caméras et un deuxième bloc dans lequel sont agencées les trois autres caméras permettant le montage en une seule étape de trois caméras d'un coup sur l'aéronef. En variante, l'équipement comporte un unique bloc dans lequel sont agencées les différentes caméras des deux ensembles ce qui permet le montage en une seule étape des six caméras d'un coup sur l'aéronef. Les caméras sont fixes vis-à-vis de l'aéronef.

Les caméras sont typiquement montées à l'avant de l'aéronef au niveau de son nez. On a ici trois caméras situées à droite du nez de l'aéronef et trois caméras situées à gauche de son nez.

Préférentiellement, les caméras 111, 112, 113 du premier ensemble 101 sont alimentées par une première source d'alimentation et les caméras 114, 115, 116 du deuxième ensemble 102 sont alimentées par une deuxième source d'alimentation qui est indépendante de la première source d'alimentation. De la sorte, la perte de l'une des sources d'alimentation permet de pouvoir conserver l'ensemble qui est alimenté par l'autre des deux sources d'alimentation.

Le premier ensemble 101 comporte une première caméra 111, une deuxième caméra 112 et une troisième caméra 113 et le deuxième ensemble 102 comporte une quatrième caméra 114, une cinquième caméra 115 et une sixième caméra 116. Les six caméras sont ici identiques.

Les six caméras sont par exemple à infra-rouge. Les six caméras sont de préférence de type LWIR. Ceci permet de travailler dans la bande LWIR qui donne de meilleurs résultats dans le cas de conditions de vol dégradées (nuit, orage, brouillard ...)

De préférence encore, les six caméras sont non refroidies. Ceci permet d'avoir des caméras moins coûteuses et plus robustes.

Dans l'invention revendiquée, la première caméra 111 et la deuxième caméra 112 sont agencées de sorte à avoir un champ de visée en vertical (site) plus important qu'en horizontal (gisement), la troisième caméra 113 occupant une position latérale d'extrémité vis-à-vis de la première caméra 111 et de la deuxième caméra 112 étant agencée de sorte à avoir un champ de visée plus important en horizontal qu'en vertical.

De manière symétrique, la cinquième caméra 115 et la sixième caméra 116 sont agencées de sorte à avoir un champ de visée en vertical plus important qu'en horizontal, la quatrième caméra 114, occupant une position latérale d'extrémité vis-à-vis de la cinquième caméra 115 et de la sixième caméra 116, étant agencée de sorte à avoir un champ de visée plus important en horizontal qu'en vertical.

La troisième caméra 113 et la quatrième caméra 114 sont agencées le plus à l'extérieur possible vis-à-vis des quatre autres caméras et de l'axe longitudinal X de l'aéronef soit les plus éloignées possibles de l'axe longitudinal X de l'aéronef. La troisième caméra 113 et la quatrième caméra 114 encadrent ainsi les quatre autres caméras.

Dans le cas présent si l'on se place dans la position du pilote, la troisième caméra 113 se trouve à gauche de l'axe longitudinal X de l'aéronef et la quatrième caméra 114 à droite.

De la sorte, en tournant la troisième caméra 113 et la quatrième caméra 114 de 90 degrés en dévers par rapport aux quatre autres, on permet très simplement d'augmenter le champ de visée horizontal (i.e. en gisement) des bandeaux panoramiques correspondants que nous décrirons plus loin et ce au niveau de la vision latérale tout en conservant une vision frontale importante en site.

Afin d'améliorer encore davantage les dimensions des bandeaux panoramiques, pour chaque ensemble 101, 102, une des trois caméras est frontale (pour la vision frontale) alors que les deux autres sont latérales (pour la vision sur les côtés). On a ainsi une caméra globalement alignée sur l'axe longitudinal X de l'aéronef et deux caméras inclinées vis-à-vis de cet axe.

De préférence, la projection de l'axe de visée de la caméra frontale dans le plan horizontal de l'aéronef est parallèle à l'axe longitudinal X de l'aéronef. Les axes de visée des caméras latérales sont inclinés vis-à-vis de l'axe longitudinal X de l'aéronef.

Afin d'améliorer encore davantage les dimensions des bandeaux panoramiques, les deux caméras latérales de chaque ensemble respectif sont orientées de manière que leurs axes de visées respectifs soient inclinés l'un par rapport à l'autre. L'une des caméras latérales de chaque ensemble a ainsi son axe de visée orientée vers la droite et l'autre des caméras du même ensemble son axe de visée orientée vers la gauche assurant ainsi une vision sur les côtés droit et gauche de l'aéronef.

Typiquement la deuxième caméra 112 et la cinquième caméra 115 sont frontales et les quatre autres caméras 111, 113, 114, 116 sont latérales.

De préférence, pour limiter les zones aveugles dans le bandeau panoramique, les trois caméras 111, 112, 113 du premier ensemble 101 sont agencées de manière que leurs différents champs de visée se recouvrent partiellement au moins à l'infini. De préférence, cette zone de recouvrement est au minimum comprise entre 1 et 5 degrés en horizontal, la zone de recouvrement pouvant être différente pour différentes zones du premier bandeau.

De la même manière, les trois caméras 114, 115, 116 du deuxième ensemble 102 sont agencées afin que leurs différents champs de visée se recouvrent partiellement au moins à l'infini. De préférence, cette zone de recouvrement est au minimum comprise entre 1 et 5 degrés en horizontal, la zone de recouvrement pouvant être différente pour différentes zones du deuxième bandeau.

Préférentiellement, les caméras frontales 112, 115 des deux ensembles sont chacune agencée selon une disposition concave avec au moins l'une des caméras latérales de l'équipement qui lui est contigüe.

Ceci permet de limiter encore davantage un risque de zone aveugle, c'est-à-dire non couverte par les bandeaux panoramiques, en particulier pour la vision à courte distance.

Dans le cas présent, les deux caméras latérales agencées au centre sont croisées de manière que la première caméra 111 du premier ensemble 101 soit associée à la cinquième caméra frontale 115 du deuxième ensemble 102 et de manière que la sixième caméra 116 du deuxième ensemble 102 soit associée à la deuxième caméra frontale 112 du premier ensemble 101.

Typiquement, la première caméra 111 est contigüe à la cinquième caméra 115 et orientée vers la cinquième caméra 115. De manière symétrique, la sixième caméra 116 est contigüe à la deuxième caméra 112 et orientée vers la deuxième caméra 112.

Ainsi l'axe de visée de la première caméra 111 est orienté vers l'axe de visée de la cinquième caméra 115 et l'axe de visée de la sixième caméra 116 est orienté vers l'axe de visée de la deuxième caméra 112.

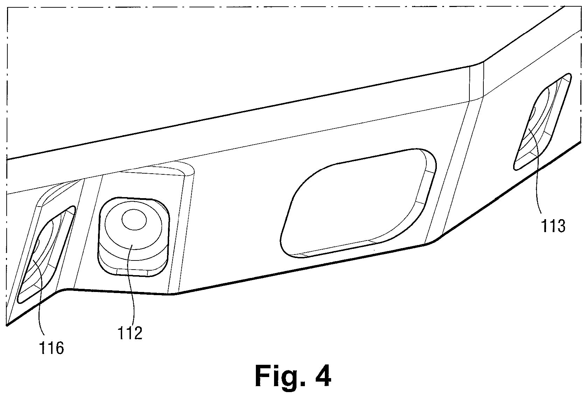

La figure 4 illustre ainsi un des deux blocs de l'équipement avec la deuxième caméra 112 et la sixième caméra 116 en architecture concave, la troisième caméra 113 étant également visible.

Si l'on se place au niveau du pilote, les caméras sont agencées de la gauche vers la droite de la manière suivante :
- troisième caméra 113 qui est latérale et orientée vers la gauche avec un champ de visée plus important en horizontal qu'en vertical,
- deuxième caméra 112 qui est frontale,
- sixième caméra 116 qui est latérale et orientée vers la gauche,
- première caméra 111 qui est latérale et orientée vers la droite,
- cinquième caméra 115 qui est frontale,
- quatrième caméra 114 qui est latérale et qui est orientée vers la droite avec un champ de visée plus important en horizontal qu'en vertical.

Chaque caméra frontale se trouve ainsi encadrée de deux caméras latérales appartenant respectivement à des ensembles différents. Par ailleurs, de chaque côté de l'axe longitudinal de l'aéronef on retrouve une caméra frontale et deux caméras latérales (la troisième 113, la deuxième 112 et la sixième caméras 116 pour le côté gauche et la première 111, la cinquième 115 et la quatrième caméras 114 pour le côté droit). Les deux caméras 113, 116, latérales du côté gauche de l'aéronef sont par ailleurs orientées toutes deux vers la gauche et les deux caméras 111, 114 latérales du côté droit de l'aéronef sont toutes deux orientées vers la droite.

Ainsi la répartition des caméras est symétrique selon l'axe longitudinal X de l'aéronef.

De façon particulière, les deux caméras frontales 112, 115 sont décalées en site (et non en gisement) l'une par rapport à l'autre. Ainsi, alors que les projections des axes de visée des deux caméras frontales 112, 115 dans le plan horizontal de l'aéronef sont parallèles, les projections des axes de visée des deux caméras frontales 112, 115 dans le plan vertical de l'aéronef sont inclinées l'une par rapport à l'autre.

Ceci permet d'augmenter le champ de visée vertical couvert par les deux ensembles 101, 102. Typiquement les axes de visée des deux caméras frontales 112, 115 sont décalés (en site et non en gisement) d'entre 1 et 10 degrés et de préférence entre 3 et 5 degrés.

De préférence, la projection de l'axe de visée de la caméra frontale dans le plan longitudinal de l'aéronef est parallèle à l'axe longitudinal X de l'aéronef. Les axes de visée des caméras latérales sont inclinés vis-à-vis de l'axe longitudinal X de l'aéronef.

L'équipement optronique comporte par ailleurs une unité électronique de traitement 103, de type calculateur, reliée au trois caméras 111, 112, 113 du premier ensemble 101 pour générer un premier bandeau panoramique 104 à partir des données transmises par les trois caméras 111, 112, 113 du premier ensemble 101 et reliée aux trois caméras 114, 115, 116 du deuxième ensemble 102 pour générer un deuxième bandeau panoramique 105 à partir des données transmises par les trois caméras 114, 115, 116 du deuxième ensemble 102. L'unité de traitement 103 est agencée à l'intérieur de l'aéronef et est reliée à un dispositif de projection d'image équipant un casque du pilote pour projeter sur une visière de celui-ci des images devant chaque œil du pilote comme on le verra par la suite. Ce type de casque est connu en lui-même et ne sera pas plus détaillé ici.

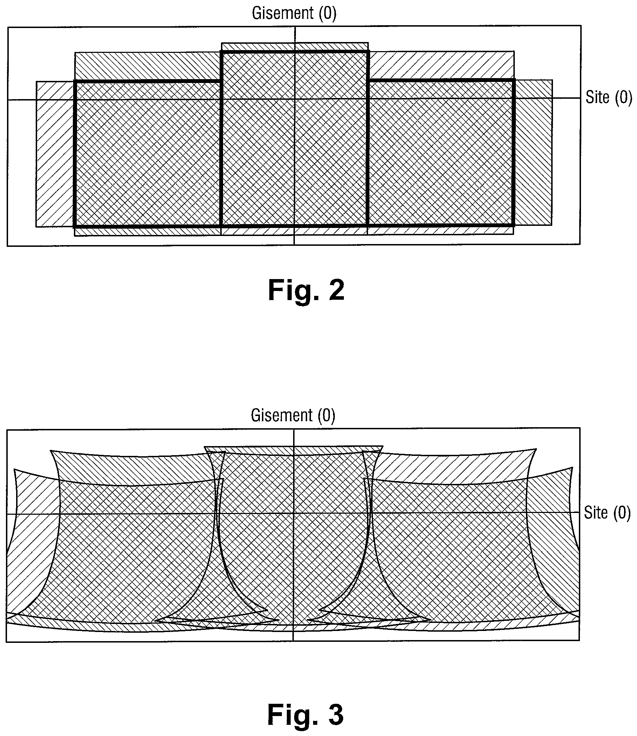

Un bandeau panoramique général, illustré par le cadre en gras sur la figure 2, correspondant à la superposition du premier bandeau 104 et du deuxième bandeau 105 peut ainsi être défini. La figure 3 est une vue moins schématique que la figure 2 prenant en compte les distorsions et les géométriques sphériques des champs de visée.

Dans le cas présent, les figures 2 et 3 sont là pour faciliter la compréhension du mode de réalisation décrit mais dans les faits il n'y a pas de création de bandeau panoramique général par l'unité de traitement 103 ou d'autres organes de calcul comme indiqué ci-dessous.

On note que le premier bandeau 104 et le deuxième bandeau 105 se recouvrent sur de larges plages verticale et horizontal. De la sorte, il est possible de projeter sur la visière du pilote des images lui assurant une vision stéréoscopique.

On associe ici le premier ensemble 101 à l'œil gauche de l'utilisateur et le deuxième ensemble 102 à l'œil droit de l'utilisateur. Une vue du premier bandeau 104 est extraite et affichée sur le côté gauche de la visière du pilote et une vue du deuxième bandeau 105 est extraite et affichée sur le côté droit de la visière du pilote, le cerveau du pilote faisant naturellement la synthèse des deux vues pour obtenir une vue en relief.

L'image restituée au pilote n'est donc plus plate mais stéréoscopique, se rapprochant au maximum d'une vision naturelle.

Encore une fois, dans le présent mode de réalisation, il n'y a pas de génération d'un bandeau général mais seulement une génération du premier bandeau et du deuxième bandeau ce qui suffit pour permettre au pilote d'avoir une vision stéréoscopique en associant à chaque œil l'un respectif desdits bandeaux.

Comme indiqué ci-dessus, les différentes caméras du premier ensemble 101 et du deuxième ensemble 102 sont préférentiellement agencées de manière que le premier bandeau 104 et le deuxième bandeau 105 se recouvrent au maximum afin d'avoir un champ de visée stéréoscopique le plus important possible.

De façon avantageuse, si l'un des ensembles était défectueux, l'autre des ensembles continuerait de permettre d'assurer l'affichage d'images sur la visière du pilote (mais sans relief). Typiquement, les mêmes images seraient affichées sur les côtés droit et gauche de la visière ou les images ne seraient affichées que sur un seul côté de la visière.

Le deuxième mode de réalisation ainsi décrit permet d'assurer une redondance. On note ainsi que chaque ensemble 101, 102 est tout à fait apte à travailler seul sans l'autre ensemble. Ainsi la perte d'un des ensembles 101, 102 ne correspond pas à la perte de la moitié du champ de visée mais seulement à la perte de la vision stéréoscopique, le champ de visée étant sensiblement identique d'un ensemble à un autre.

De préférence, l'implantation des caméras est telle qu'elle respecte une distance interpupillaire entre les caméras redondées (soit la distance séparant les axes de visée des caméras considérées).

La distance interpupillaire d1 entre les deux caméras frontales est de préférence supérieure à 250 millimètres.

De la même manière, la distance interpupillaire d2 entre les deux caméras latérales orientées vers la droite d'une part et la distance interpupillaire d3 entre les deux caméras latérales orientées vers la gauche d'autre part sont également supérieures à 250 millimètres. Dans le cas présent, la distance interpupillaire latérale d2, d3 est la même pour les caméras orientées vers la droite et pour les caméras orientées vers la gauche. La distance interpupillaire latérale d2, d3 est sensiblement de 280 millimètres.

De préférence, la distance interpupillaire frontale d1 est plus importante que la distance interpupillaire latérale d2, d3. Typiquement la distance interpupillaire frontale d1 est supérieure à 350 millimètres et de préférence supérieure ou égale à 400 millimètres.

En service, les caméras transmettent leurs données à l'unité de traitement 103 qui génère le premier bandeau 104 et le deuxième bandeau 105 à partir de ces données. En fonction de la position du casque de l'utilisateur, l'unité de traitement 103 extrait des bandeaux une vue droite et une vue gauche correspondantes qu'il affiche dans le casque de l'utilisateur.

On peut ainsi avoir avantageusement une utilisation multi-utilisateurs de l'équipement optronique en extrayant des bandeaux autant de vues indépendantes qu'il y a d'utilisateurs.

On offre avec ce mode de réalisation une vision stéréoscopique sur un large champ de visée horizontal et vertical tout en ayant une très bonne résolution, et ce avec seulement six caméras.

Les inventeurs ont ainsi pu obtenir un prototype avec un champ de visée de sensiblement 180 degrés par 90 degrés (à plus ou moins 5 degrés pour le champ de visée horizontal de 180 degrés et à plus ou moins 2 degrés pour le champ de visée vertical de 90 degrés) et avec une résolution comprise entre 1 et 1,5 milliradian.

Cette application n'est bien entendu pas limitative. L'équipement selon un mode de réalisation particulier de l'invention peut ainsi être conformé de manière à avoir un champ de visée global de sensiblement 240 degrés par 90 degrés (à plus ou moins 5 degrés pour le champ de visée horizontal de 240 degrés et à plus ou moins 2 degrés pour le champ de visée vertical de 90 degrés) et avec une résolution minimale de 1,1 milliradian. La portion stéréoscopique de ce champ est sensiblement de 205 degrés en horizontal (à plus ou moins 5 degrés) par 69 degrés en vertical au niveau latéral (à plus ou moins 2 degrés) et 90 degrés en vertical au niveau frontal (à plus ou moins 2 degrés).

Bien entendu l'invention n'est pas limitée à ce qui a été décrit et on peut y apporter des variantes sans sortir du cadre de l'invention tel que défini par les revendications.

En particulier, bien que dans les différents modes de réalisation décrits, les caméras soient de type LWIR, les caméras pourront bien entendu être différentes et être de type refroidies, non refroidies, infrarouges en bande infrarouge moyenne (plus connues sous l'acronyme anglais MWIR) ... De la même manière, l'équipement optronique pourra travailler dans d'autres domaines du spectre électromagnétique que le domaine de l'infra-rouge. L'équipement optronique pourra ainsi en variante ou en complément opérer dans le domaine du visible, de l'ultraviolet... Les caméras seront alors de type correspondant. Au sein d'un même ensemble ou d'un ensemble à un autre, les caméras pourront ne pas être identiques entre elles.

Bien qu'une seule caméra par ensemble soit tournée vis-à-vis des deux autres, un plus grand nombre de caméras pourra être tourné de manière à avoir un champ de visée en horizontal plus important qu'en vertical.

Bien que les six caméras soient reliées à une seule unité de traitement, chaque ensemble pourra être relié à une unité de traitement dédiée, chaque unité de commande générant alors le bandeau panoramique de l'ensemble associé. En cas de défaillance, d'un des ensembles de caméras, on pourra prévoir de n'utiliser pour l'affichage que le bandeau panoramique fourni par l'ensemble de caméras non défaillant (l'œil gauche et l'œil droit de l'utilisateur verront alors le même bandeau d'image). On pourra également prévoir que chacune des deux unités de traitement, si besoin, puissent communiquer avec chacun des ensembles de caméra : ainsi en cas de perte de l'une des unités de traitement, l'autre pourra continuer à assurer la génération du bandeau panoramique de chacun des ensembles. Les unités de traitement seront ainsi redondées. On pourra par exemple intégrer chaque unité de traitement dans un des boîtiers regroupant les caméras de l'ensemble associé.

Bien qu'ici chaque ensemble de caméras est affecté à un œil de l'utilisateur pour avoir une voie droite et une voie gauche, les deux ensembles pourront être affectés aux deux yeux. Une seule vue sera alors projetée sur le viseur faisant la synthèse des deux ensembles. On pourra par exemple générer un bandeau panoramique général à partir des bandeaux générés pour chaque ensemble et extraire une vue qui sera projetée sur le viseur (les bandeaux générés pour chaque ensemble pourront être générés individuellement puis associés ou pourront être générés de manière à être directement intégrés au bandeau panoramique général).

La disposition des caméras pourra être différente de ce qui a été indiqué. Pour des questions par exemple d'agencement, d'encombrement ... on pourra ainsi préférer avoir des caméras agencées de manière convexe et non concave comme ce qui a été indiqué. Les caméras du premier ensemble pour ainsi être d'un même côté et les caméras du deuxième ensemble d'un autre côté.

Les deux ensembles pourront être agencés de manière que le premier bandeau et le deuxième bandeau se recouvrent en totalité, afin d'avoir un champ de visée stéréoscopique le plus important possible, ou en partie seulement, afin d'élargir le champ de visée global.

Lorsque l'aéronef est équipé de plusieurs ensembles de caméras répartis sur son pourtour (par exemple deux ensembles avant comme décrit ici, et deux ensembles disposés à l'arrière, et éventuellement deux ensembles disposés sur chaque côté de l'aéronef), l'unité de traitement est agencée pour commander l'affichage des images provenant des caméras positionnées sur l'aéronef dans la direction du regard du pilote. La direction du regard du pilote est estimée en fonction de l'orientation du casque du pilote par rapport au cockpit de l'aéronef. A titre d'exemples pour détecter l'orientation du casque par rapport au cockpit de l'aéronef, le casque peut être équipé d'une centrale inertielle qui permet de détecter l'orientation du casque dans l'espace (connaissant l'orientation de l'aéronef dans l'espace par la centrale inertielle de celui-ci, il est possible de déterminer l'orientation du casque par rapport au cockpit) ou le cockpit peut être équipé de caméras pour détecter des cibles optiques portées par le casque et déterminer ainsi l'orientation du casque par rapport au cockpit).

L'invention est utilisable avec tout dispositif d'affichage relié à l'unité de traitement 103. Au lieu d'un dispositif de projection sur la visière du casque du pilote, le casque du pilote peut comprendre deux afficheurs placés chacun devant un des yeux du pilote pour afficher les bandeaux panoramiques.

## Revendications

1. Equipement optronique d'aide au pilotage d'un aéronef comportant un premier ensemble (101) de trois caméras, appelées première caméra, deuxième caméra et troisième caméra, agencées sur l'aéronef pour générer un premier bandeau panoramique à partir des données transmises par les trois caméras du premier ensemble et un deuxième ensemble (102) de trois caméras, appelées quatrième caméra, cinquième caméra et sixième caméra, agencées sur l'aéronef pour générer un deuxième bandeau panoramique à partir des données transmises par les trois caméras du deuxième ensemble,
les caméras étant montées à l'avant de l'aéronef au niveau de son nez, trois caméras étant situées à droite du nez de l'aéronef et trois caméras étant situées à gauche de son nez,
la troisième caméra (113) et la quatrième caméra (114) occupant une position latérale d'extrémité sur l'aéronef, vis-à-vis des quatre autres caméras du premier ensemble et du deuxième ensemble,
la troisième caméra (113) et la quatrième caméra (114) étant agencées de sorte à avoir un champ de visée plus important en horizontal qu'en vertical,
seules la troisième caméra et la quatrième caméra sur les six caméras des deux ensembles étant agencées de sorte à avoir un champ de visée plus important en horizontal qu'en vertical, la troisième caméra (113) et la quatrième caméra (114) encadrant les quatre autres caméras (111, 112, 115, 116),
les deux ensembles étant agencés de manière que les deux bandeaux se recouvrent au moins en partie de sorte à fournir une vision stéréoscopique au pilote.

2. Equipement selon la revendication 1, dans lequel au moins deux caméras contiguës (112, 116, 111, 115) sont agencées avec une disposition concave.

3. Equipement selon la revendication 2, dans lequel les deux caméras agencées au centre des six caméras sont croisées de manière qu'une première caméra (112) du premier ensemble et une première caméra (116) du deuxième ensemble soient agencées avec une disposition concave et qu'une deuxième caméra (111) du premier ensemble et une deuxième caméra (115) du deuxième ensemble soient agencées avec une disposition concave également.

4. Equipement selon l'une des revendications 1 à 3, dans lequel deux caméras (112, 115) appartenant respectivement à un ensemble différent sont décalées en site l'une par rapport à l'autre.

5. Equipement selon la revendication 1, comprenant une unité électronique de traitement reliée aux caméras et agencée pour former au moins une image à partir des deux bandeaux d'images.

6. Equipement selon la revendication 5, dans lequel l'image formée à partir des deux bandeaux d'images est une image à large champ.

7. Equipement selon la revendication 1, comprenant une unité électronique de traitement reliée aux caméras et agencée pour afficher les deux bandeaux d'images de manière stéréoscopique.

8. Equipement selon l'une des revendications 1 à 7, dans lequel les caméras (111, 112, 113) du premier ensemble (101) sont alimentées par une première source d'alimentation et les caméras (114, 115, 116) du deuxième ensemble (102) sont alimentées par une deuxième source d'alimentation qui est indépendante de la première source d'alimentation.

9. Equipement selon l'une des revendications précédentes, comportant au moins un bloc dans lequel sont agencées les caméras.

10. Equipement selon l'une des revendications précédentes, dans lequel les caméras travaillent dans le domaine de l'infra-rouge.

11. Equipement selon la revendication précédente, dans lequel les caméras sont de type LWIR.

12. Equipement selon l'une des revendications précédentes, dans lequel les caméras sont non refroidies.

13. Equipement selon l'une quelconque des revendications précédentes, comprenant une unité de traitement reliée aux caméras et à un casque équipé d'un dispositif d'affichage d'image visible par les yeux du pilote portant le casque.

## Patentansprüche

1. Optronische Ausrüstung zur Unterstützung der Steuerung eines Luftfahrzeugs, mit einer ersten Gruppe (101) von drei Kameras, auch erste Kamera, zweite Kamera und dritte Kamera genannt, die derart am Luftfahrzeug angeordnet sind, dass sie aus den von den drei Kameras der ersten Gruppe übertragenen Daten ein erstes Panoramaband erzeugen, und mit einer zweiten Gruppe (102) von drei Kameras, auch vierte Kamera, fünfte Kamera und sechste Kamera genannt, die derart am Luftfahrzeug angeordnet sind, dass sie aus den von den drei Kameras der zweiten Gruppe übertragenen Daten ein zweites Panoramaband erzeugen,
wobei die Kameras in dem Vorderteil des Luftfahrzeugs im Bereich der Nase angebracht sind, wobei sich drei Kameras an der rechten Seite der Luftfahrzeugnase und drei Kameras an der linken Seite der Luftfahrzeugnase befinden,
wobei sich die dritte Kamera (113) und die vierte Kamera (114) gegenüber den anderen vier Kameras der ersten Gruppe und der zweiten Gruppe in einer seitlichen Endposition an dem Luftfahrzeug befinden,
wobei die dritte Kamera (113) und die vierte Kamera (114) derart angeordnet sind, dass sie ein größeres Sichtfeld in der Horizontalen als in der Vertikalen haben,
wobei nur die dritte Kamera und die vierte Kamera aus den sechs Kameras beider Gruppen derart angeordnet sind, dass sie ein größeres Sichtfeld in der Horizontalen als in der Vertikalen haben, wobei die dritte Kamera (113) und die vierte Kamera (114) die anderen vier Kameras (111, 112, 115, 116) umrahmen,
wobei die beiden Gruppen derart angeordnet sind, dass sich die beiden Panoramabänder zumindest teilweise derart überlappen, dass dem Piloten dadurch eine stereoskopische Sicht ermöglicht wird.

2. Ausrüstung nach Anspruch 1, wobei zumindest zwei benachbarte Kameras (112, 116, 111, 115) eine konkave Anordnung aufweisen.

3. Ausrüstung nach Anspruch 2, wobei die beiden in der Mitte der sechs Kameras angebrachten Kameras, derart gekreuzt sind, dass eine erste Kamera (112) der ersten Gruppe und eine erste Kamera (116) der zweiten Gruppe eine konkave Anordnung aufweisen, und dass eine zweite Kamera (111) der ersten Gruppe und eine zweite Kamera (115) der zweiten Gruppe ebenfalls eine konkave Anordnung aufweisen.

4. Ausrüstung nach einem der Ansprüche 1 bis 3, wobei zwei Kameras (112, 115), die jeweils einer unterschiedlichen Gruppe angehören, einen zueinander versetzten Anbringungsort aufweisen.

5. Ausrüstung nach Anspruch 1, umfassend eine elektronische Verarbeitungseinheit, die mit den Kameras verbunden ist und die derart angeordnet ist, dass sie aus den beiden Bändern von Bildern zumindest ein Bild erzeugt.

6. Ausrüstung nach Anspruch 5, wobei es sich bei dem aus den beiden Bändern von Bildern erzeugten Bild um ein Breitfeldbild handelt.

7. Ausrüstung nach Anspruch 1, umfassend eine elektronische Verarbeitungseinheit, die mit den Kameras verbunden ist und die derart angeordnet ist, dass sie die beiden Bänder von Bildern stereoskopisch anzeigt.

8. Ausrüstung nach einem der Ansprüche 1 bis 7, wobei die Kameras (111, 112, 113) der ersten Gruppe (101) von einer ersten Stromquelle und die Kameras (114, 115, 116) der zweiten Gruppe (102) von einer von der ersten Stromquelle unabhängigen, zweiten Stromquelle versorgt werden.

9. Ausrüstung nach einem der vorhergehenden Ansprüche, umfassend zumindest einen Block, in welchem die Kameras angeordnet sind.

10. Ausrüstung nach einem der vorhergehenden Ansprüche, wobei die Kameras im Infrarotbereich arbeiten.

11. Ausrüstung nach dem vorhergehenden Anspruch, wobei es sich bei den Kameras um LWIR-Kameras handelt.

12. Ausrüstung nach einem der vorhergehenden Ansprüche, wobei es sich bei den Kameras um ungekühlte Kameras handelt.

13. Ausrüstung nach einem der vorhergehenden Ansprüche, umfassend eine Verarbeitungseinheit, die mit den Kameras und mit einem Helm verbunden ist, welcher mit einer Anzeigevorrichtung ausgestattet ist, die ein für die Augen des Piloten, der den Helm trägt, sichtbares Bild anzeigt.

## Claims

1. Optronic equipment for assisting with piloting an aircraft, the equipment including a first set (101) of three cameras, called first camera, second camera, and third camera, arranged on the aircraft to generate a first panoramic strip from data transmitted by the three cameras of the first set and a second set (102) of three cameras, called fourth camera, fifth camera, and sixth camera, arranged on the aircraft to generate a second panoramic strip from data transmitted by the three cameras of the second set,
the cameras being mounted at the front of the aircraft at its nose, three cameras being situated on the right of the nose of the aircraft and three cameras being situated on the left of its nose,
the third camera (113) and fourth camera (114) occupying an extreme lateral position on the aircraft, relative to the other fourth cameras of the first and second sets,
the third camera (113) and fourth camera (114) being arranged so as to have a field of view that is greater horizontally than vertically,
wherein only the third camera and fourth camera of the six cameras in the two sets are arranged so as to have a field of view that is greater horizontally than vertically, the third camera (113) and the fourth camera (114) bracketing the other four cameras (111, 112, 115, 116),
wherein the two sets are arranged in such a manner that the two strips overlap, at least in part, to provide the pilot with stereoscopic vision.

2. Equipment according to claim 1, wherein at least two contiguous cameras (112, 116, 111, 115) are arranged in a concave configuration.

3. Equipment according to claim 2, wherein the two cameras arranged at the center of the six cameras are crossed so that a first camera (112) of the first set and a first camera (116) of the second set are arranged in a concave configuration and so that a second camera (111) of the first set and a second camera (115) of the second set are also arranged in a concave configuration.

4. Equipment according to any one of claims 1 to 3, wherein two cameras (112, 115) belonging to respective different sets are offset relative to each other in elevation.

5. Equipment according to claim 1, comprising an electronic processor unit connected to the cameras and arranged to form at least one image from the two image strips.

6. Equipment according to claim 5, wherein the image formed from the two image strips is a wide-field image.

7. Equipment according to claim 1, comprising an electronic processor unit connected to the cameras and arranged to display the two image strips in stereoscopic manner.

8. Equipment according to any one of claims 1 to 7, wherein the cameras (111, 112, 113) of the first set (101) are powered by a first power supply, and the cameras (114, 115, 116) of the second set (102) are powered by a second power supply that is independent of the first power supply.

9. Equipment according to any preceding claim, including at least one block in which the cameras are arranged.

10. Equipment according to any preceding claim, wherein the cameras operate in the infrared range.

11. Equipment according to the preceding claim, wherein the cameras are of the LWIR type.

12. Equipment according to any preceding claim, wherein the cameras are not cooled.

13. Equipment according to any preceding claim, comprising a processor unit connected to the cameras and to a helmet fitted with a device for displaying an image visible to the eyes of the pilot wearing the helmet.
